**Europäisches Patentamt**

**European Patent Office**

**Office européen des brevets**

(19)

(11) Veröffentlichungsnummer : **0 384 423 B1**

## (12) EUROPÄISCHE PATENTSCHRIFT

(45) Veröffentlichungstag der Patentschrift :
**19.08.92 Patentblatt 92/34**

(51) Int. Cl.$^5$ : **F24D 3/08, F24H 9/12, F16K 15/14**

(21) Anmeldenummer : **90103307.6**

(22) Anmeldetag : **21.02.90**

(54) **Warmwasserspeicher mit einem von Brauchwasser durchströmten Heizkreis mit aussen liegendem Heizelement und mit einer Ladewechselvorrichtung.**

(30) Priorität : **23.02.89 DE 3905874**

(43) Veröffentlichungstag der Anmeldung :
**29.08.90 Patentblatt 90/35**

(45) Bekanntmachung des Hinweises auf die
Patenterteilung :
**19.08.92 Patentblatt 92/34**

(84) Benannte Vertragsstaaten :
**AT CH DK FR LI SE**

(56) Entgegenhaltungen :
**DE-B- 2 804 748
DE-U- 8 603 917**

(56) Entgegenhaltungen :
**DE-U- 8 806 712
FR-A- 2 370 931
FR-A- 2 405 443
US-A- 4 158 384**

(73) Patentinhaber : **SOLVIS Energiesysteme
GmbH
Marienberger Strasse 1
W-3300 Braunschweig (DE)**

(72) Erfinder : **Kräutle, Michael
Hachumer Strasse 29
W-3305 Evessen-Hachum (DE)**

(74) Vertreter : **Gralfs, Harro, Dipl.-Ing.
Am Bürgerpark 8
W-3300 Braunschweig (DE)**

**Beschreibung**

Warmasserspeicher mit einem von Brauchwasser durchströmten Heizkreis mit außen liegendem Heizelement und mit einer Ladewechselvorrichtung

Die Erfindung bezieht sich auf einen Warmwasserspeicher mit einem von Brauchwasser durchströmten Heizkreis mit außen liegendem Heizelement und mit einer Ladewechselvorrichtung nach dem Oberbegriff des Patentanspruches 1.

Mit einer Ladewechselvorrichtung wird das erwärmte Wasser aus dem Vorlauf des Heizkreises in den Warmwasserspeicher eingeführt und hier seiner Temperatur entsprechend in Relation zum vorhandenen Temperaturprofil des Speichers abgelegt. Je genauer diese Ablage vorgenommen wird, desto geringer sind die Exergieverluste, die aus Mischungen von Wasser mit unterschiedlichem Temperaturniveau entstehen.

Bei einem bekannten Warmwasserspeicher der gattungsgemäßen Art wird das erwärmte Wasser von oben in das Warmwasserzuführrohr eingespeist. Die Auslässe sind jeweils mit einer um eine mittige Achse schwenkbaren Regelklappe versehen, die über ein temperaturabhängiges Steuerelement betätigt wird (Böck, H. et al. "Verbesserung von Flachkollektoren zur thermischen Sonnenenergienutzung", BMFT-Forschungsbericht T 84 - 042, März 1984). Als Steuersystem ist ein Röhrchen-Kugel-System, das mit Diethylether in gasförmiger und flüssiger Phase gefüllt ist und starr mit der Regelklappe verbunden ist, vorgesehen. Ist während eines Beladevorganges die Temperatur im Zulaufrohr höher als die in der entsprechenden Speicherschicht, in der sich die Regelklappe befindet, so steigt der Dampfdruck in der Kugel, die innerhalb des Beladerohres liegt. Beim Verdampfen der Flüssigkeit in der wärmeren inneren Kugel und Kondensieren des Dampfes in der kälteren, außen liegenden Kugel wird die Flüssigkeit in die äußere Kugel gedrückt, es entsteht ein Drehmoment, durch das die Klappe öffnet. Eine derartige Klappensteuerung ist aufwendig und teuer sowie störanfällig, da alle Teile langzeitig im Medium Wasser funktionieren müssen. Schwierig ist bei einem derartigen Regelventil weiter das Erzielen einer ausreichenden Dichtigkeit der Klappe. Undichtigkeiten führen zu inneren Wasserzirkulationen und damit zu Mischvorgängen und Exergieverlusten.

Bekannt ist weiter eine einstückige plattenförmige Rückschlagklappe mit einem die Klappe im Abstand umgebenden Haltering und wenigstens einem sich dazwischen radial erstreckenden schmalen Gelenkabschnitt, die aus einem Elastomer besteht (JP 62-155 382 gem. JP-Patent Abstracts M-652, 1987 Vol 11, Nv. 388).

Der Erfindung liegt das Problem zugrunde, einen Wasserspeicher mit einer Ladewechselvorrichtung so auszugestalten, daß die Exergieverluste minimierbar sind, wobei die Ladewechselvorrichtung einfach in der Herstellung und weitgehend wartungsfrei ist und eine hohe Lebensdauer erwarten läßt.

Dieses Problem wird gemäß der Erfindung gelöst bei einem Warmwasserspeicher nach dem Oberbegriff des Patentanspruches 1 durch die im kennzeichnenden Teil dieses Anspruches herausgestellten Merkmale.

Zweckmäßige Ausgestaltungen sind Gegenstand der Unteransprüche.

Die Erfindung ist in der Zeichnung in einem Ausführungsbeispiel veranschaulicht und nachstehend im einzelnen anhand der Zeichnung beschrieben.

Fig. 1 zeigt schematisch einen Warmwasserspeicher mit einer Ladewechselvorrichtung.

Fig. 2 zeigt im Querschnitt ein an die Ladewechselvorrichtung nach Fig. 1 ansetzbares Klappenventil.

Fig. 3 zeigt in Draufsicht eine Klappe.

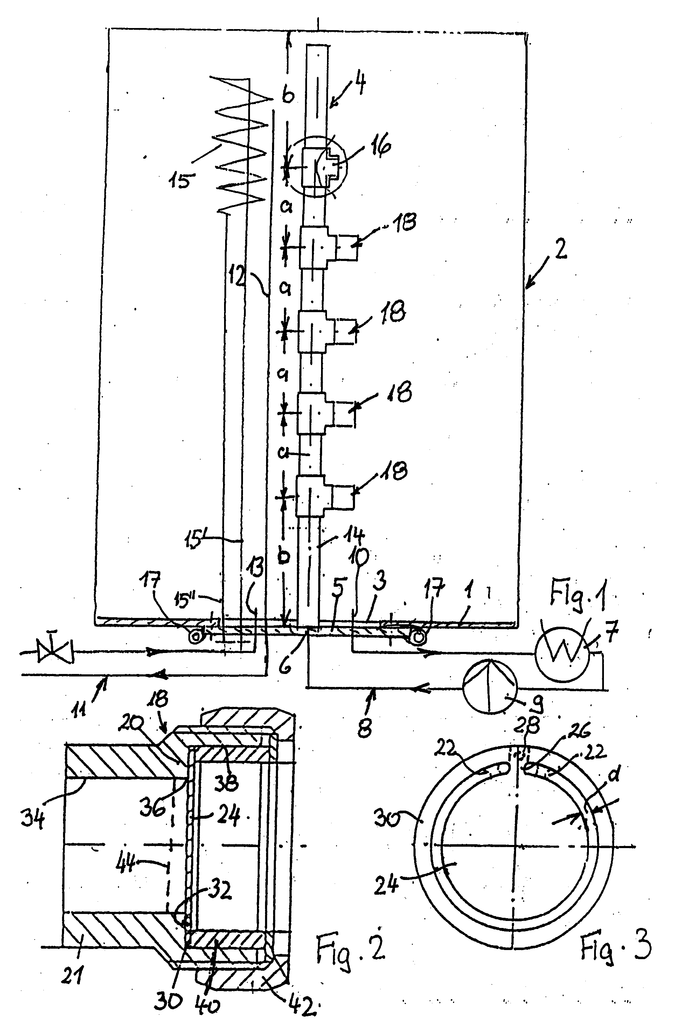

Der in Fig. 1 schematisch dargestellte Warmwasserspeicher 2 kann eine beliebige Form haben und beispielsweise als zylindrischer Tank ausgebildet sein mit einer Höhe, die vorzugsweise größer ist als der Durchmesser. Auch viereckige Querschnitte sind möglich, und die Endwände können eben oder gewölbt sein. Der Speicher kann als Druckspeicher oder als druckloser Speicher ausgebildet sein. Der Boden 1 des Speichers ist mit einer Öffnung 3 versehen, die durch einen Deckel 5 verschlossen ist.

In dem Speicher 2 ist bei dem Ausführungsbeispiel mittig eine Ladewechselvorrichtung 4 vorgesehen, die mit einem hier unten liegenden Einlaß 6 durch den die Öffnung 3 im Boden 1 des Speichers abschließenden Deckel 5 hindurchgeführt und an diesem befestigt ist. Im Deckel 5 ist weiter ein im Bodenbereich des Speichers mündendes Rücklaufrohr 10 des Heizkreises 8 angeordnet, der mit einem Heizelement 7 und einer Umwälzpumpe 9 dargestellt ist, aber auch sonstige übliche Bauelemente, z. B. Ausdehnungsgefäß, Rückschlagventil, Luftabscheider mit Entlüfter, Sicherheitsventil, Regler für die Umwälzpumpe und dergleichen, einschließt. Der Heizkreis 8 wird von Brauchwasser durchströmt. Der Heizkreis 8 kann ein Primärheizkreis sein, in dem das Heizelement direkt solar - im Nachstehenden als "Solarheizung" bezeichnet - oder durch eine Wärmepumpe beheizt wird. Alternativ oder zusätzlich kann auch ein durch Abfallenergie, beipielsweise durch warme Abwässer beheizter Wärmetauscher vorgesehen sein. Das Heizelement 8 kann aber auch der Wärmetauscher eines solar oder durch Abwärme beheizten Primärheizkreises sein, in dem ein Heizmedium zirkuliert, das mit dem Brauchwasser nicht verträglich, beispielsweise bei einer Solarheizung mit einem Frostschutzmittel versetzt ist.

Im Speicher ist ferner ein Warmwasservorlaufrohr 12 eines Brauchwasserkreises 11 angeordnet, das im oberen Bereich des Speichers mündet und gleichfalls durch den Deckel 5 des Speichers geführt und an diesem befestigt ist, in dem weiter der Frischwasseranschluß 13 des Brauchwasserkreises 11 angeordnet ist. Durch den Deckel 5 sind weiter Vor- und Rücklauf 15', 15″ eines Nachwärmetauschers 15 für die Nachheizung durch konventionelle Heizsysteme hindurchgeführt.

Alle für den Betrieb notwendigen Vor- und Rückläufe sowie der Frischwasseranschluß sind damit durch den Deckel 5 geführt und fest mit diesem verbunden und können damit gemeinsam als eine Einheit gehandhabt und in den Speicher eingeführt werden. Mit dem Deckel 5 sind weiter Stützen 17 fest verbunden, auf die weiter unten eingegangen wird.

Die Ladewechselvorrichtung 4 weist ein sich über die Höhe des Speichers erstreckendes Rohr 14 auf, das im Abstand unter dem Deckel offen endet und in vorgegebenen Abständen seitliche Öffnungen 16 aufweist, die in dem Ausführungsbeispiel die Abgänge im Abstand übereinander angeordneter T-Stücke sind. Die Zahl der Auslässe 16 und ihr Abstand a ist abhängig von der Speicherhöhe. Der Abstand a kann beispielsweise 200 mm betragen. Der Abstand b der Auslässe 18 vom Boden und vom oberen Deckel des Speichers kann größer sein. Die Ladewechselvorrichtung 4 kann beispielsweise aus Rohrabschnitten und den erwähnten T-Stücken aus Kunststoff zusammengesetzt sein, wobei Kleb- oder Schweißverbindungen vorgesehen sein können. Kunststoffe haben eine geringere Wärmeleitfähigkeit als Metalle, und es findet daher durch die Wandungen auch ein entsprechend geringerer Wärmetausch zwischen dem zugeführten Warmwasser und Wasser in kälteren Schichten des Speichers statt. Auch für den Speicher ist ein Material geringer Wärmeleitfähigkeit vorteilhaft, damit der Wärmetransport über die Speicherwände, der zu unerwünschten Zirkulationsströmungen führt, klein bleibt.

In die Ausgänge 16 der Ladewechselvorrichtung 4 sind jeweils Ventile 18 eingesetzt, wie sie beispielsweise in Fig. 2 dargestellt sind. Das Ventilgehäuse 20 ist mit einem Anschlußstutzen 21 versehen, mit dem es in den Auslaß 16 des Rohres 14 der Ladewechselvorrichtung einsetzbar, beispielsweise verklebbar ist. Die Ventile können aber auch unmittelbar in den Auslässen angeordnet oder ausgebildet sein.

Das Ventil 18 ist als Klappenventil mit einer Ventilklappe 24 mit einem hochflexiblen Dichtungsbereich ausgebildet. Vorzugsweise besteht die Ventilklappe 24 aus einem Elastomer. Sie ist mit einer Aufhängung versehen, die senkrecht zum Ventilsitz eine hohe Elastizität aufweist. Eine bevorzugte Ausführung der Klappe 24 ist in Fig. 3 in Ansicht wiedergegeben. Die kreisförmige Klappe 24 ist an ihrem Umfang mit wenigstens einer schmalen Gelenkzunge 26 versehen, die mit der Klappe 24 aus einem Stück besteht. Über die Gelenkzunge 26 ist die Klappe 24 in dem Ventilgehäuse 20 befestigt. Die Gelenkzunge 26 geht in einen äußeren Halte- oder Montagering 30 über, der mit der Klappe 24 und der Gelenkzunge 26 aus einem Stück besteht und der die Klappe 24 über den gesamten Umfang in einem Abstand d umschließt, durch den sichergestellt ist, daß sich die Klappe 24 frei innerhalb des Halteringes 30 bewegen kann. Die Gelenkzunge 26 hat senkrecht zur Klappenebene eine hohe Elastizität. Statt einer Gelenkzunge können auch zwei Gelenkzungen 22 in geringem Abstand voneinander vorgesehen sein, wie in Fig. 3 gestrichelt angedeutet.

Das Ventilgehäuse 20 ist mit einer radialen Schulter 32 versehen, die den Boden einer Einsenkung des Ventilgehäuses bildet und am Übergang in die Gehäusebohrung 34 eine scharfkantige Dichtungskante 36 aufweist. Auf der Schulter 32 liegt der Haltering 30 auf. Gegen diesen Haltering liegt ein in der erweiterten Gehäusebohrung 38 geführter Druckring 40 an, der durch eine Überwurfmutter 42 gehalten ist, die mit einem Außengewinde auf dem Ventilgehäuse 20 zusammenwirkt.

Der Durchmesser der Klappe 24 ist so gewählt, daß er mit seinem Umfang die Dichtungskante 36 des Ventilsitzes um etwa 1 bis 2 mm übergreift. Die Anordnung der Klappe 24 in dem Gehäuse 20 ist so, daß die Gelenkzunge(n) 26 symmetrisch zur Senkrechten durch den Ventildurchgang liegt, so daß die Klappe 24 sich mit ihrem Schwerpunkt auf dieser Senkrechten befindet.

Die Klappe 24, die Gelenkzunge 26 und der Haltering 30 bestehen aus einem Stück, und zwar aus einem nicht quellenden Elastomer, vorzugsweise einem Silikongummi. Auch andere, in warmem Wasser nicht quellende Elastomere können vorgesehen sein. Eine Dicke der Klappe 24 zwischen 0,8 und 1,5 mm ist empfehlenswert.

Im Gebrauch wirkt über die Ventilklappe ein Differenzdruck, der dem Dichteunterschied des Wassers zu beiden Seiten der Klappe entspricht. Solange das außen auf die Klappe wirkende Wasser eine höhere Dichte hat als das auf der Innenseite anstehende Wasser, wird über den auf die Klappe wirkenden Differenzdruck die Klappe mit ihrem Randbereich gegen den Ventilsitz gedrückt. Dabei erfolgt aufgrund der hohen Elastizität bereits bei geringen Druckdifferenzen ein Durchwölben der Klappe, durch welches ein relativ hoher Dichtungsdruck im Bereich der linienförmigen Berührung der Klappe mit dem scharfkantigen Dichtungssitz 36 erzeugt wird, so daß eine sichere Abdichtung gewährleistet ist. Der Dichtungsdruck reicht hierbei aus, beim Schließen der Klappe Luftblasen, die sich an der Klappe niederschlagen, aus dem Dichtungsbereich zu verdrängen.

Um bei größeren Ventildurchmessern ein zu großes Durchwölben der Ventilklappe zu verhindern, kann stromaufwärts vom Dichtungssitz 36 eine Abstützung für die Klappe vorgesehen werden, beispielsweise ein im Durchgang angeordnetes Stützgitter 44. Es ist weiter möglich, zu diesem Zweck die Ventilklappe in ihrem mittleren Bereich mit einer die Steifigkeit erhöhenden Verstärkung zu versehen, die einseitig oder auch beidseitig vorgesehen werden kann.

Im Betrieb wird bei Dichte- und damit Temperaturgleichheit des Wassers beidseitig der Ventilklappe der Dichtungsdruck aufgehoben, so daß das in die Ladewechselvorrichtung eingespeiste erwärmte Wasser durch seine kinetische Energie die Klappe öffnen und durch das Ventil in den Speicher einströmen kann. Auf diese Weise wird sichergestellt, daß das Wasser in einer Ebene des Warmwasserspeichers eingeladen wird, in der im wesentlichen das Temperaturniveau des eingespeisten Wassers vorhanden ist.

Die Auslässe der Ladewechselvorrichtung können, wie in der Zeichnung dargestellt, in einer Richtung angeordnet sein. Sie können aber auch über den Umfang der Ladewechselvorrichtung jeweils im Winkel versetzt zueinander liegen. Es ist auch möglich, für jede Auslaßebene jeweils zwei entgegengesetzt gerichtete Auslaßöffnungen vorzusehen, die jeweils mit einem Klappenventil abgeschlossen sind. Bei Behältern mit großen Querschnitten kann es weiter angezeigt sein, mit zwei und mehr Ladewechselvorrichtungen zu arbeiten. Der Behälter kann auch ein natürlicher Speicher sein, wie beispielsweise ein sogenannter Jahresspeichersee.

Die Klappenventile sind einfach in ihrem Aufbau und preisgünstig herzustellen. Ihre Arbeitsweise wird auch durch sich etwa niederschlagende Luftblasen nicht gestört. Sie arbeiten ausschließlich in Abhängigkeit von den über die Klappe wirkenden Dichteunterschieden des Wassers. Sie kommen daher ohne zusätzliche Steuer- oder Regelorgane aus. Alle Ventile, über denen eine ausreichende von der Dichtedifferenz abhängige Druckdifferenz vorhanden ist, schließen dicht, so daß das Auftreten unerwünschter Leckströmungen vermieden ist.

**Patentansprüche**

1. Warmwasserspeicher (2) mit einem von Brauchwasser durchströmten Heizkreis (8) mit außen liegendem Heizelement (7) und einer Ladewechselvorrichtung (4) mit einem im Speicher senkrecht angeordneten Warmwasserzuführrohr (14) im Vorlauf des Heizkreises, das mit in Abständen übereinander angeordneten Auslässen (16) versehen ist, in/an denen Klappenventile (18) angeordnet sind, die in den Speicherraum öffnen, dadurch gekennzeichnet,

daß das Warmwasserzuführrohr (14) mit einem unten liegenden Einlaß (6) versehen ist und am oberen Ende frei in den Speicherraum mündet,

daß die Klappenventile (18) als einstückige plattenförmige dünnwandige Rückschlagklappen (24) mit einem die Klappe im Abstand umgebenden Haltering (30) und wenigstens einem sich dazwischen radial erstreckenden schmalen Gelenkabschnitt (26) ausgebildet sind, die aus einem Elastomer bestehen,

daß die Klappenventile (18) ein seitlich am Warmwasserzuführrohr angeordnetes Ventilgehäuse (20) aufweisen, das mit einer als Boden einer Einsenkung des Ventilgehäuses ausgebildeten radialen Schulter (32) versehen ist, auf der der Haltering (30) der Ventilklappe vollflächig aufliegt,

daß für den Haltering (30) ein Andruckring (40) vorgesehen ist,

daß als Ventilsitz für die Klappe (24) eine scharfkantige Dichtungskante (36) an der Schulter (32) vorgesehen ist, die von der Klappe mit einem geringen Überstand übergriffen wird.

2. Warmwasserspeicher nach Anspruch 1, dadurch gekennzeichnet, daß im Ventilgehäuse (20) stromaufwärts vom Dichtungssitz (36) eine Abstützung (44) für die Klappe (24) vorgesehen ist.

3. Warmwasserspeicher nach Anspruch 2, dadurch gekennzeichnet, daß die Abstützung (44) siebartig ausgebildet ist.

4. Warmwasserspeicher nach Anspruch 1, dadurch gekennzeichnet, daß die Klappe (24) aus einem Silikongummi besteht.

5. Warmwasserspeicher nach Anspruch 4, dadurch gekennzeichnet, daß die Klappe (24) eine Dicke kleiner als 1,5 mm hat.

6. Warmwasserspeicher nach Anspruch 1, dadurch gekennzeichnet, daß die Klappe (24) radial einwärts vom Dichtungssitz (36) mit einer die Steifigkeit erhöhenden Verstärkung versehen ist.

**Claims**

1. Hot water tank (2) with a heating circuit (8) through which flows service water with externally situated heating element (7), and a variable charging device (4) with a hot water feed pipe (14), arranged vertically in the tank, in the inlet section of the heating circuit, said feed pipe (14) being provided with outlets (16) arranged at intervals one above the other in/on which flap valves (18) opening into the tank space are arranged, characterised in that

the hot water feed pipe (14) is provided with an inlet (6) at the bottom and at the upper end issues unobstructed into the tank space,

the flap valves (18) are constructed as single-piece thin-walled swing check valves (24) in disc form with a retaining ring (30) surrounding the valve at a distance and with at least one narrow articulated section (26) extending radially between the latter, which are made of an elastomer,

the flap valves (18) possess a valve housing (20) arranged laterally on the hot water feed pipe, said valve housing (20) being provided with a radial shoulder (32) which is formed as the bottom of a depression in the valve housing and on whose whole area the retaining ring (30) of the valve flap rests,

a pressure ring (40) is provided for the retaining ring (30),

there is provided as valve seat for the valve (24) a sharp-edged sealing edge (36) on the shoulder (32), which is covered by the valve with a small overstand.

2. Hot water tank according to claim 1, characterised in that in the valve housing (20) there is provided upstream of the seal seat (36) a support (44) for the valve (24).

3. Hot water tank according to claim 2, characterised in that the support is constructed after the manner of a screen.

4. Hot water tank according to claim 1, characterised in that the valve (24) is made of a silicone rubber.

5. Hot water tank according to claim 4, characterised in that the valve (24) has a thickness of less than 1.5 mm.

6. Hot water tank according to claim 1, characterised in that the valve (24) is provided radially inwards from the seal seat (36) with a reinforcement increasing the rigidity.


**Revendications**

1. Accumulateur d'eau chaude (2) avec un échangeur de chaleur (8) pour eau sanitaire avec élément de chauffage extérieur (7) et un distributeur pour l'eau d'alimentation (4) avec un conduit d'alimentation en eau chaude (14) du circuit de chauffage disposé verticalement dans l'accumulateur, qui est pourvu de sorties (16) disposées avec un écartement entre elles, dans lesquelles/auxquelles sont appliquées les valves (18), qui débouchent dans le volume de l'accumulateur, caractérisé

en ce que le conduit d'alimentation en eau chaude (14) est pourvu d'une entrée (6) située au bas de l'accumulateur, et débouche librement de son extrémité du haut dans le volume de l'accumulateur,

en ce que les valves (18) sont construites commes des clapets antiretour (24) en une seule pièce, en forme de plaque, à parois minces, avec un anneau de montage (30) entourant le clapet dans un écartement et avec au moins une section articulée (26) mince s'étendant radialement entre eux, qui sont composés d'un élastomère,

en ce que les valves (18) présentent un carter de valve (20) disposé latéralement par rapport au conduit d'alimentation en eau chaude, prévu avec un épaulement (32) radial formé en tant que fond d'un affaissement du carter de valve, sur lequel est appliqué de toute sa surface l'anneau de montage du clapet de valve,

en ce que l'on prévoit un anneau de serrage (40) pour l'anneau de montage (30),

en ce que l'on prévoit à l'épaulement (32) une bordure d'étanchement à arête vive (36) comme siège de valve pour le clapet (24), que le clapet recouvre avec un faible débordement.

2. Accumulateur d'eau chaude selon la revendication 1, caractérisé en ce que l'on prévoit un support (44) pour le clapet (24) en amont du siège d'étanchement (36) dans le carter de valve (20).

3. Accumulateur d'eau chaude selon la revendication 2, caractérisé en ce que le support (44) est formé comme un crible.

4. Accumulateur d'eau chaude selon la revendication 1, caractérisé en ce que le clapet (24) est composé d'un caoutchouc silicone.

5. Accumulateur d'eau chaude selon la revendication 4, caractérisé en ce que le clapet (24) a une épaisseur inférieure à 1,5 mm.

6. Accumulateur d'eau chaude selon la revendication 1, caractérisé en ce que le clapet 24 est pourvu, radialement en dedans du siège d'étanchement, d'un renforcement augmentant la rigidité.

Fig. 1

Fig. 2

Fig. 3